# EUROPEAN PATENT SPECIFICATION

(11) **EP 3 962 795 B1**
(45) Date of publication and mention of the grant of the patent: **27.03.2024**
(21) Application number: 20728816.8
(22) Date of filing: 28.04.2020
(51) Int. Cl.: B62B 3/06, B62B 3/00, B62B 5/02

(54) **PALLET TRUCK**
PALETTENHUBWAGEN
TRANSPALETTE

(30) Priority: 30.04.2019 IT 201900006465
(43) Date of publication of application: 09.03.2022
(73) Proprietor: Zonzini, Claudio, 37052 Casaleone (VR) (IT); Zonzini, Jacopo, 37052 Casaleone (VR) (IT); Zonzini, Arianna, 37053 Cerea (VR) (IT); Zonzini, Laura, 37053 Cerea (VR) (IT)
(72) Inventor: ZONZINI, Claudio, 37052 Casaleone (VR) (IT)
(74) Representative: Braidotti, Andrea
(86) International application number: PCT/IB2020/054001
(87) International publication number: WO 2020/222121

(56) References cited:
- EP-A1- 1 486 393
- CH-A2- 704 490
- DE-U1-202009 013 688
- FR-A1- 3 033 782
- US-A- 5 752 584

## Description

### TECHNICAL FIELD

The present invention relates to a transpallet i.e. a pallet jack, preferably a high performance multipurpose pallet jack. More particularly, the present invention relates to a pallet truck for lifting and / or moving / moving loads, preferably of empty pallets or of pallets loaded with goods.

### STATE OF THE ART

Both manual and motorized pallet jacks are known and widely used in any type of company.

The manual forklift truck with rudder, more commonly called pallet jack, is a mechanical vehicle used for handling loads inside warehouses or on external yards, used in industrial and commercial environments for the movement and transport of articles, goods or products of various nature, shape and weight arranged on platforms or pallets. The truck can move by electric or manual power-assisted traction and is equipped with a pneumatic lifting system that allows only the load to be detached from the ground to allow movement.

Pallets have standard and well-defined dimensions and, therefore, the pallet jack is also generally a standard product with well-defined dimensions that vary little from one manufacturer to another.

A pallet jack is generally equipped with two forks connected to a central vertical arm capable of safely picking up the pallet and lifting it to be able to move and displace it.

A pallet jack generally has wheels, two or four of which are housed in the fork brackets and have the function of keeping on the ground to stabilize the pallet jack during the handling of the load. Suitably, the wheels can be made of various materials.

The pallet jack is therefore a machine designed for moving pallets inside warehouses or on external yards, for lifting and moving goods inside logistics warehouses or for loading and unloading goods from means of transport.

Manual pallet jacks are used in cases where only basic handling is necessary, which does not require great use of transport forces. In a manual pallet jack, lifting and moving are manual, and transport takes place by pulling the truck in the desired direction.

The electric pallet jack, on the other hand, lifts loads and moves them using electric power supply. This truck provides advantages in the warehouse management of large companies that transport a large quantity of daily goods.

In addition to the mentioned pallet jacks, electric pallet jacks are known to be used only in off-road routes, ideal in particular for use on rough terrain or for the transport of materials on pallets in construction sites, transport of wood or pellets or handling of goods in greenhouses and garden centers. These trucks are available with direct or alternating current power supply, but above all they are equipped with different motorized wheels or tracks according to the fields of use.

Currently, off-road electric pallet jacks with wheels are equipped with a frame with a rear wheel, generally for towing, and two side wheels which are placed at a width such as to contain the pallet to be moved externally, thus increasing the stability of the load during the handling. However, such a type of off-road electric pallet jack has some drawbacks due to the size and in particular of such wheels or side tracks. In fact, for example, the pallets positioned on the ground next to each other must be able to be interspersed with enough space to allow the side wheel structure to enter, so as to allow the load to be picked up from the vehicle in question. Furthermore, the size due to the wheels or side tracks tends to hinder the movement through paths or warehouses with reduced width, for example in small cellars in the case of transporting loads of pellets.

A further disadvantage of the known off-road electric pallet jacks with wheels is due to the fact that, on inclined or particularly uneven ground, they can present load balancing problems, for example, being unable to travel in the lateral direction (i.e. substantially angular or perpendicular) with respect to the slope of an inclined ground.

US5752584 describes a pallet jack provided with two pairs of forks, superimposed on each other, and in which the upper pair of forks can be lifted with respect to the lower pair of forks.

FR3033782 describes a lifting device equipped with wheels that are mobile - though the action of an actuator - between a lifting position and a trailer position.

CH704490 describes a transport trolley equipped with lifting arms and lower arms equipped with wheels for resting and sliding on the ground.

EP1486393 describes a device for handling pallets comprising a base structure equipped with a first pair of wheels and a load support structure, which is movable in a vertical direction with respect to the base structure and which is equipped with a second pair of wheels.

### SUMMARY OF THE INVENTION

The object of the present invention is to overcome and obviate, at least in part, the aforementioned drawbacks and operating limits of known solutions.

Another object of the present invention is to provide a pallet jack suitable for use both on regular and substantially smooth terrains, such as for example the floor of a square, and on uneven ground or in "offroad" or "off road" paths / conditions.

Another object of the present invention is to propose a pallet jack which allows the load to be moved in particularly small spaces.

Another object of the present invention is to propose a jack pallet that allows the handling of the load even in spaces with a width just greater than the width of the pallet / load to be handled, thus being able to position the load, for example also inside small vans using small ramps of loading.

Another object of the present invention is to propose a pallet jack which is suitable to be used also in off-road paths / conditions, that is, in particularly rough paths and presenting various difficulties, such as for example particularly steep slopes and / or obstacles, very sharp turns, and / or uneven surfaces, etc.

Another object of the present invention is to provide a pallet jack capable of advancing also transversely with respect to the slope of an inclined surface.

Another object of the invention is to provide a pallet jack capable of overcoming rough terrain and obstacles of a certain size.

Another object of the invention is to provide a pallet jack that is reliable and resistant over time.

Another object of the invention is to provide a pallet jack that can be manufactured simply, quickly and at low cost.

Another object of the invention is to provide a pallet jack of low weight and easy to transport.

Another object of the invention is to provide a pallet jack which is alternative and / or improved compared to traditional solutions.

All these objects, considered both individually and in any combination thereof, and others which will result from the following description are achieved with a pallet jack as defined in claim 1. Preferred embodiments are defined in the dependent claims.

### BRIEF DESCRIPTION OF THE DRAWINGS

The present invention is further described below in some of its preferred embodiments, given purely by way of non-limiting example with reference to the attached drawings, wherein:
- figure 1 is a perspective view of the pallet jack according to the invention in a first configuration, which is preferably suitable for loading;
- figure 2 is a perspective view of the pallet jack according to the invention in said first configuration and during its movement, for example on a regular ground / floor, with the load (not shown) raised;
- figure 3 is a side view of the pallet jack in the same configuration as in fig. 2;
- figure 4 is a perspective view of the pallet jack according to the invention, with the load (not shown) lifted, during the transition from the first configuration to a second configuration (suitable for off-road routes);
- figure 5 is a side view of the pallet jack according to the invention during the transition from the first configuration to a second configuration (suitable for off-road routes) and in a subsequent phase with respect to that of fig. 4;
- figure 6 is a perspective view of the pallet jack according to the invention, with the load (not shown) raised, once it has reached the second configuration, which is suitable for handling in off-road routes;
- figure 7 is a different perspective view of the pallet jack according to the invention in the same configuration of fig. 6.

### DETAILED DESCRIPTION OF THE INVENTION

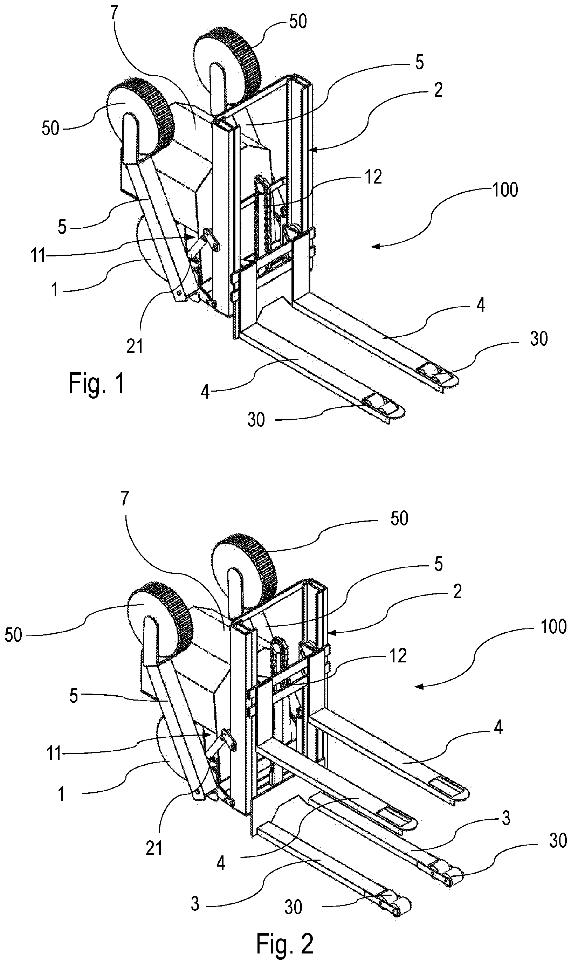

With reference to figures 1 to 7, a preferred embodiment is shown with some details of variant of the pallet jack 100 according to the invention.

Figure 1 shows pallet jack 100 according to the invention in a first configuration, which is suitable for loading / unloading one or more pallets, empty or with goods, or in general of one or more loads or goods to be handled (not represented).

Pallet jack 100, according to the present invention comprises a frame 11 mounted on at least one driving wheel 1, preferably motorized.

Advantageously, frame 11 is a supporting and supporting frame. Preferably, said driving wheel 1 is motorized and steered.

Suitably, driving wheel 1 is associated below the frame 11; in particular, frame 11 is supported by said at least one motorized towing wheel 1 and, preferably, is mounted on said wheel so as to allow the steering rotation of the latter.

Conveniently, in an embodiment not shown of the pallet jack, multiple wheels 1 could be provided, of which at least one or all of them are motorized.

Conveniently, in a version not shown, two wheels (parallel to each other), or three wheels (arranged at the vertices of an isosceles or equilateral triangle) or four or more wheels (for example two front and two rear) can be provided, of which at least one or two - or even all - are motorized.

Suitably, driving wheel 1 is motorized by means of a motor unit 7 comprising a motor 70, which can be electric or endothermic. Preferably, motor unit 7 is mounted on the frame 11.

Preferably, motor unit 70 also comprises a steering motor 71.

Advantageously, motor unit 7 comprises a box-shaped casing in which motor 70 is housed for the actuation of the driving wheel 1 and steering motor 71.

Suitably, said at least one driving wheel 1 is configured to move and cause the forward motion of pallet jack 100.

Advantageously, driving wheel 1 is equipped with a steering maneuverable by the operator, so as to provide the complete movement of jack 100 pallet in any direction.

Pallet jack 100 also comprises a vertical post 2 that, suitably, is associated with frame 11. Preferably, vertical post 2 is positioned front / front (with respect to the direction of advance of the pallet jack) with respect to frame 11 and / or with respect to the drive wheel 1.

Conveniently, vertical post 2 is equipped with a (first) mechanism 12 for the vertical movement (in particular for lifting) of lifting arms 4 intended to go in support / contact with the load to be lifted, which can be for example a pallet to be moved. In particular, said arms 4 comprise lifting blades.

Conveniently, mechanism 12 comprises a corresponding actuator element (not shown) configured to move load lifting arms 4 vertically (i.e. lift).

Conveniently, pallet jack 100 also comprises lower arms 3 that are associated and supported by post 2 and preferably slide along said post 2.

Advantageously, lower arms 3 are provided with rollers 30, preferably idle, or other rotating or sliding elements, configured to go in support and slide on the ground / floor / ground of movement of the pallet jack 100.

Advantageously, a further (second) mechanism is also provided for the vertical movement of said lower arms 3 provided with rollers 30, in particular for causing the sliding of lower arms 3 along post 2.

Preferably, said further vertical movement mechanism of lower arms 3 comprises a corresponding actuator means 20.

Preferably, said further mechanism is configured to move lower arms 3 vertically along said vertical post 2 between:
- an operating position in which said rollers 30, or other rotating or sliding elements, are in contact with the ground on which said at least one driving wheel 1 rests, and
- at least one rest position in which said rollers 30, or other rotating or sliding elements, are spaced / lifted from the ground on which said at least one driving wheel 1 rests. Advantageously, pallet jack 100 also comprises a swing actuator 21 connected to vertical post 2, and which is configured to precisely allow the upright swing of post 2, once the load has been correctly positioned on lifting arms 4, for thus being able to position (in particular tilting to rebalance) the load safely while handling it.

Pallet jack 100 also includes two support arms 5 on which side wheels 50 are mounted.

Conveniently, said two support arms 5 are positioned on opposite sides of frame 11 and / or of vertical post 2. In particular, preferably, at least two side wheels 50 are provided, each of which is mounted on a support arm 5. In greater detail, side wheels 50 are pivoted on support arms 5 in the sense that the rotation axis of each side wheel 50 is mounted on a corresponding support arm 5. Preferably, side wheels 50 are solid wheels.

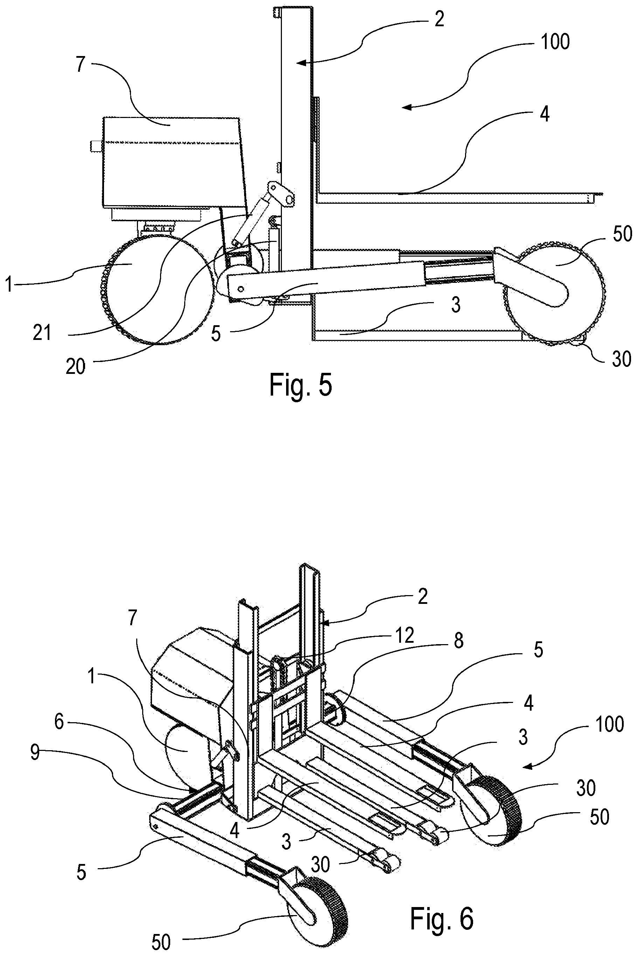

Suitably, pallet jack 100 is configured so that support arms 5 can be rotated - preferably about the development axis of a transversal element 6 that supports them - so as to switch between:
- a first condition (see fig. 1, 2 and 3) in which both side wheels 50 mounted on support arms 5 are spaced and raised with respect to the ground / plane / supporting floor of said at least one driving wheel 1, and
- a second condition (see fig. 5, 6 and 7) in which at least one of said side wheels 50 - preferably both side wheels 50 - mounted on support arms 5 contact the ground / support surface / floor of said at least one driving wheel 1.

Suitably, said at least one driving wheel 1 is and always remains in contact and resting on the ground / floor / ground of movement of pallet jack 100.

Advantageously, in said first condition, support arms 5 are substantially in a substantially vertical or slightly inclined orientation with respect to the vertical direction, and preferably side wheels 50 are above driving wheel 1.

Advantageously, in said second condition, support arms 5 are substantially in a substantially horizontal or slightly inclined orientation with respect to the horizontal, and preferably side wheels 50 are substantially at the same level (or at a slightly lower or higher level) compared to driving wheel 1.

Suitably, support arms 5 are therefore configured to raise / remove side wheels 50 from the ground and to lower them / bring them into contact with the latter.

Preferably, to switch from said first condition to said second condition, support arms 5 rotate at least 90 ° in two opposite directions.

Conveniently, moreover, pallet jack 100 is configured so that support arms 5 can be moved - preferably along the development axis of a transversal element 6 which supports them - so that the arms themselves and side wheels 50 mounted on the arms can be mutually approached or moved away.

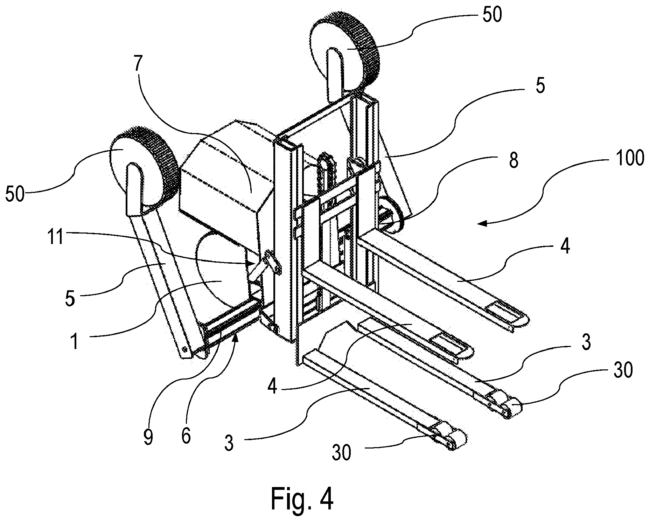

In particular, moreover, pallet jack 100 is configured so that support arms 5 can be moved
- preferably along the development axis of a transversal element 6 which supports them - so that the arms themselves and side wheels 50 mounted on the arms can switch between:
- a first position (see figs. 1 and 2) in which support arms 5 and side wheels 50 - mounted on said arms - are less spaced from each other,
- a second position (see fig. 4) in which support arms 5 and side wheels 50 - mounted on said arms - are more widely spaced apart.

Preferably, pallet jack 100 is configured so that, in said first position, the distance between side wheels 50 is substantially equal to or less than the lateral width of vertical post 2.

Advantageously, support arms 5 can be mutually approached / moved away - preferably along the development axis of a transversal element 6 which supports them - only when they are in said first condition, preferably before starting any rotation that brings them from said first condition to said second condition.

Alternatively, support arms 5 can be mutually approached / moved away - preferably along the development axis of a transversal element 6 that supports them - both when they are in said first condition and when they are in said second condition.

Suitably, two support arms 5 are positioned on the sides of post 2 and are hinged and / or fixed on a transversal element 6, preferably telescopic, so that as to rotate about the development axis of said transverse element.

In particular, transversal element 6 comprises extendable arms 8, 9 for spacing / moving apart and thus bringing together support arms 5, and therefore the respective side wheels 50 mounted on said support arms 5, along the axis of development of the cross element itself.

Advantageously at least one of said support arms 5, preferably both support arms 5, are extendable and retractable.

Advantageously, two extendable arms 8, 9 of transverse element 6 are independent of each other so that the elongation of arm 9 can also be different from that of the other arm 8, so as to provide a different spacing of each support arm 5 with respect to the frame 11 and / or with respect to post 2.

Preferably, two support arms 5 of side wheels 50 are independent of each other so that the rotation of one arm 5 can also be different from that of the other arm.

Preferably, each support arm 5 is hinged or fixed to transverse element 6 at one end, while the rotation axis of each side wheel 50 is mounted at the other end.

Suitably, transverse element 6 can be configured to rotate around its longitudinal development axis; in particular, in this case, each support arm 5 is fixed / rotationally connected to the respective extendable arm 8, 9 of telescopic transversal element 6, so as to define a rotating assembly inside a tube which is preferably integral with frame 11. Preferably, telescopic transverse element 6 is configured to allow such rotation only when it is in the extended condition, i.e. when extendable arms 8, 9 are pulled out. Alternatively, support arms 5 can be configured to rotate about the respective extendable arms 8, 9 of telescopic transversal element 6, extendable arms that instead remain fixed and do not rotate; in particular, in this case, support arms 5 are hinged and rotate with respect to extendable arms 8, 9 of telescopic transverse element 6.

Alternatively, support arms 5 can be configured to rotate about lateral portions of frame 11 that are movable in mutual approach / removal from each other.

Advantageously, two support arms 5 are associated with at least one actuator (which preferably but not necessarily is pneumatic) which causes the preferably controlled rotation of said arms around an axis of rotation - which is preferably substantially horizontal and is defined by the longitudinal development axis of the transversal element 6 - so as to switch between said first condition and said second condition. In particular, support arms 5 are controlled - each or both - by a suitable actuator, controlled by the operator, which is configured to switch support arms 5 between the first and second conditions, and thus cause their rotation so as to raise / bring side wheels 50 closer to the ground.

Advantageously, transversal element 6 is provided with at least one further actuator (which preferably but not necessarily is pneumatic) that causes the - preferably controlled - movement of extendable arms 8, 9 on which support arms 5 are mounted, to do so switching the latter (and side wheels 50) between said first position and said second position.

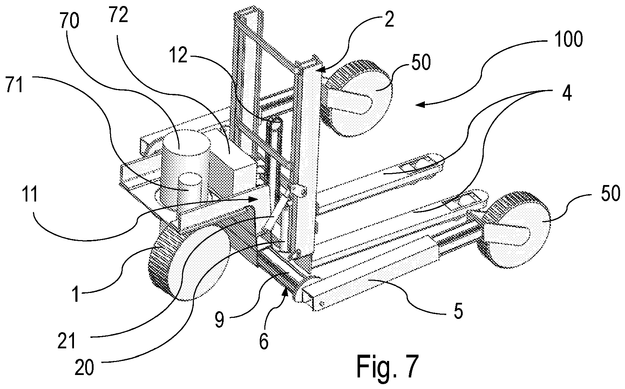

Pallet jack 100 is configured to reach and switch between:
- a first configuration (see fig. 1 -3) in which said at least one driving wheel 1 and rollers 30 of said lower arms 3 rest on the ground, while support arms 5 are in said first condition,
- a second configuration (see figs. 6 and 7) in which said at least one driving wheel 1 and side wheels 50 mounted on support arms 5 - which are thus in said second condition - rest on the ground, while lower arms 3 with rollers 30 are spaced / lifted with respect to the.

Advantageously, pallet jack 100 is configured so as to also comprise a configuration, which preferably is intermediate between said first configuration and said second configuration, wherein said at least one driving wheel 1 and rollers 30 (or the other rotating or sliding elements ) of said lower arms 3 rest on the ground, and in which also side wheels 50 mounted on support arms 5, which are thus in said second condition, rest on the ground. Conveniently, therefore, when pallet jack 100 is in said first configuration, lower arms 3 with rollers 30 are substantially in contact with or near the ground.

Preferably, as shown in Figure 1, when pallet jack 100 is in said first configuration, to be used for loading / unloading, lifting arms 4 are superimposed and mobile with respect to lower arms 3 which, by means of rollers 30, contact the ground, and in particular they contact a regular surface of the ground on which the pallet jack is positioned and intended to move. In particular, lifting arms 4 are movable between a contact position, or in any case of close proximity, with respect to lower arms 3 to one or more positions in which they are spaced / raised with respect to said lower arms 3.

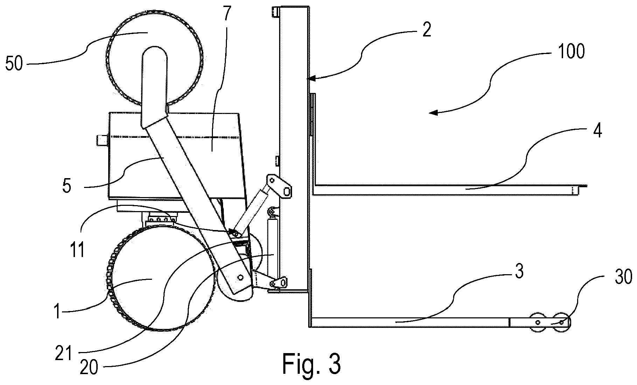

Conveniently, when pallet jack 100 is in said first configuration, the pallet jack itself rests on the ground / soil, preferably on a regular surface of the latter, with driving wheel 1 and with rollers 30 (or other rotating elements and / or sliding) of lower arms 3, and is therefore in equilibrium and is free to move on said ground / soil. In this configuration, lifting arms 4, initially superimposed (in contact or in proximity) to lower arms 3 with rollers 30, can space themselves from said lower arms to fit corresponding seats of the pallet or in any case of the load to be moved, which therefore can be lifted, due to the lifting of lifting arms 4 operated by the corresponding actuator element (not shown) of movement mechanism 12 (see figures 2 and 3). In this first configuration and with the load / pallet lifted by lifting arms 4, pallet jack 100 can continue to move the load / pallet within an environment or between environments with a ground having a regular surface, for example the internal storage warehouses or external handling areas.

Should pallet jack 100 subsequently have to leave the regular surface in which it is located, to face uneven ground and / or an inclined plane, possibly also moving transversely or angled (i.e. laterally) with respect to the inclination of the ground itself, before undertaking this new operating condition, the pallet jack must modify its configuration and thus switch into said second configuration (as illustrated in figures 4, 5 and 6), also called "offroad" configuration, since it is precisely suitable for being used for movements on particularly rough paths and presenting various difficulties, such as particularly steep slopes and / or obstacles, very sharp turns, and / or uneven surfaces, etc.

To reach said second configuration, keeping arms 3 with the rollers 30 resting on the ground, support arms 5 (which are in said first condition) are first moved away from each other (so as to pass from said first position at said second position), preferably by means of extendable arms 8, 9 of telescopic transversal element 6 (see fig. 4). Subsequently, support arms 5 are rotated around their longitudinal axis until side wheels 50, mounted on said support arms 5, touch the ground (see figures 5 and 6), thus passing from the first condition to the second condition.

Suitably, the relative reciprocal separation between two support arms 5 and the relative side wheels 50 - preferably obtained by extending extendable arms 8, 9 of telescopic transversal element 6 - takes place, preferably in an adjustable way, until it exceeds the dimensions of the pallet / load to be moved which is supported by lifting arms 4, to allow support arms 5 to lower from the first condition to the second condition in which side wheels 50 mounted on support arms 5 rest on the ground, and thus advantageously allow off-road handling.

Conveniently, in the second condition, support arms 5 for side wheels 50 can be locked (in rotation and / or in translation of mutual approach / removal) by means of a manual locking pin or other equivalent devices, for example electromechanical, to maintain thus stably said second condition.

Advantageously the pallet jack comprises a locking device configured to lock said support arms 5 in said second condition and / or when they are mutually spaced apart.

Advantageously, as shown in fig. 5, in the passage from the first to the second configuration but before reaching the latter configuration, pallet jack 100 is placed on the ground with driving wheel 1, two side wheels 50, and with lower arms 3 with rollers 30 . To complete / achieve the second configuration, called "off road", lower arms 3 with rollers 30 are lifted along vertical post 2 by means of the corresponding additional (second) movement mechanism, so that the pallet jack reaches the second final off-road configuration in which it rests on the ground only with said at least one driving wheel 1 and with side wheels 50, as shown in figure 6.

Conveniently, during the transition from the first configuration, preferably suitable for loading / unloading, to the second configuration called "off road", and vice versa, the load / pallet supported by lifting arms 4 is kept stably in the raised position, i.e. lifting 4 are well spaced / raised with respect to lower arms 3. In essence, preferably, during the transformation of pallet jack 100 from the first configuration to the second configuration, the load / pallet remains raised and held in position by lifting arms 4.

It should be noted that in the second final off-road configuration, pallet jack 100 rests on the ground with driving wheel 1 and two side wheels 50, which are advantageously full and suitably sized to overcome the disconnections of the ground during the handling of the pallet or load in gender. This second configuration, suitable for offroad routes, allows you to easily overcome obstacles since the pallet jack moves with free light from the underlying ground / soil on which wheels 1 and 50 rest (in particular lower arms 3 and also frame 11 are suitably spaced from the ground). Conveniently, in fact, said at least one driving wheel 1 and side wheels 50 have a much larger diameter than rollers 30 of lower arms 3.

Suitably, even in this second configuration, the operator to improve the stability of the load can operate the actuator for the swing 21 of post 2 and, therefore, of the load supported by lifting arms 4.

Once the off-road route is over - which can be characterized by uneven terrain and / or various slopes (also steep) and / or by curves with a particularly narrow radius - and therefore reach a regular terrain, pallet jack 100 can switch from the second configuration (also called "offroad") to the first configuration which, preferably, is suitable for loading / unloading to be carried out on a homogeneous and regular ground, such as inside a warehouse or handling yard. In particular, in this case, the operator will activate said further movement mechanism to lower lower arms 3 with rollers 30 until they rest on the ground, and subsequently (or even simultaneously / previously) it will pass support arms 5 from the second to the first condition; in more detail, support arms 5, and consequently of the side wheels 50, are raised by rotating them - preferably around the axis of transversal element 6 - until support arms 5 reach the vertical rest position predetermined, after which extendable arms 8, 9 of transversal element 6 are conveniently retracted so as to bring side wheels 50 closer to each other. Conveniently, therefore, when pallet jack 100 is in said first configuration and support arms 5 are close together, the lateral dimensions of the pallet jack itself is substantially defined / corresponds to the maximum dimensions of the pallet / load to be handled and supported by lifting arms 4. Therefore, once the first configuration has been reached, the loading / unloading and, in particular, the operator can control the lowering of lifting arms 4 and therefore the positioning on the ground of the relative pallet or load in general.

Advantageously, when it is in its first configuration, pallet jack 100 has reduced lateral dimensions in correspondence with lower arms 3 and lifting arms 4 and, therefore, provides to exploit the most of all the space available to store more pallets, being able to put them close side by side, without having to take into account the size of side wheels 50 and support arms 5, which are thus close to each other and enclosed near frame 11 and / or motor unit 7 of the pallet jack.

Advantageously, in said first configuration, the maximum lateral dimensions of the unloaded pallet jack 100 (i.e. without load on the lifting arms 4) corresponds to the lateral dimensions defined by vertical post 2.

Furthermore, the small dimensions of the pallet jack 100 in said first configuration provides its use on small vans using loading ramps.

Advantageously, pallet jack 100 can also provide that two support arms 5 are telescopic and, preferably, are extendable and retractable (see figures 5, 6 and 7), thus improving stability in said second configuration during off-road handling , especially in the case of transporting bulky loads.

Advantageously, in a further embodiment, pallet jack 100 can provide that support arms 5 are independent in movement from each other, that is, they can be rotated / moved - independently and separately from each other - in such a way such that side wheels 50, mounted on the respective arms, can be positioned at different heights with respect to frame 11 of the pallet jack; advantageously, for example, this allows pallet jack 100 - when it is in the second configuration - to travel on inclined terrains transversely or even to overcome obstacles on the ground that can be encountered only on the direction of only one of the two side wheels 50.

In essence, pallet jack 100 object of the invention also provides to move loads in confined spaces and on regular terrains, and also allows you to move loads on uneven or uneven ground or in general on off-road routes.

Advantageously, pallet jack 100 according to the invention is provided with at least one electric motor for the actuation of the driving wheel 1 and / or the steering and, preferably, in this case a battery 72 is also provided for the electric power supply of said electric motor (s). However, pallet jack 100 could be equipped with an internal combustion engine for the implementation of said at least one driving wheel 1.

Advantageously, actuators of the pallet jack 100 comprise the actuator element of (first) mechanism 12 for moving lifting arms 4, and / or actuator means 20 of said further (second) mechanism for moving lower arms 3, and / or the actuator for swing 21, and / or an actuator for the rotation of support arms 5 and / or a further actuator for the extension of the telescopic transversal element.

Suitably, said actuators can be electric, electro-hydraulic, pneumatic, with gas springs, and / or equivalent actuators.

Suitably, said actuators can all be of the same type or of different types.

Suitably, pallet jack 100 is equipped with an electronic control and management unit which is connected to a control interface for the operator and is also connected to the motors of the motor unit 7 and / or to the various actuators with which the pallet is equipped. jack itself.

Suitably, the electronic control unit is configured to receive the commands given by the operator and transform them into operating commands for the corresponding motors and / or actuators of the pallet jack.

Advantageously, pallet jack 100 is provided with a command and control interface - for example defined by a push-button panel, with or without display, and / or by a touch-screen screen, and / or a steering wheel and / or control levers and / or a joystick - which is connected via cable or wireless (for example via Wi-Fi or Bluetooth) with the electronic control and command unit of the aforementioned motors and / or actuators with which the pallet jack is equipped. In particular, by acting on the command and control interface, the operator can send corresponding commands to motor 70 of the driving wheel and to steering motor 71, so as to obtain the movement of the pallet jack in the desired direction and its complete operation, as well as it can control the automatic transition from the first configuration to the second configuration, and vice versa.

Advantageously the pallet jack comprises a command and control interface for the operator connected via cable or wirelessly with said electronic control and command unit. Conveniently the pallet jack comprises an electronic control and management unit connected to a control interface for the operator and also connected to the motors 71, 72 of a motor unit 70 and / or to the actuators 20, 21 with which the pallet jack is provided. Advantageously, the command and control interface (not shown) can comprise a console mounted on frame 11 and / or in correspondence with motor unit 7 in correspondence with the rear area of pallet jack 100, i.e. the area - opposite to the front one in where lower 3 and lifting arms 4 are located - where the operator is positioned to control pallet jack 100.

Suitably, at least one handle (not shown) for the operator can be associated with frame 11.

Conveniently, pallet jack 100 can comprise - in correspondence with its rear area (i.e. the area further back than the normal or usual direction of advance of the pallet jack) - a control station for the operator, which can advantageously be defined by a platform and / or a cabin and / or a seat and / or a passenger compartment in general. Advantageously, the control station comprises a protection frame, which is preferably provided with a roof.

Suitably, the control station is associated and / or mounted on frame 11.

## Claims

1. Pallet jack for lifting and / or handling loads, in particular pallets, empty or with goods, or other loads in general, comprising:
- a frame (11) mounted on at least one driving wheel (1), preferably motorized, for handling the pallet jack,
- a vertical post (2) associated with said frame (11),
- lifting arms (4) of the load to be lifted / moved, said lifting arms (4) being mounted on said vertical post (2) and being associated with a mechanism (12) for their vertical movement along said vertical post (2)
- lower arms (3) equipped with rollers (30), or other rotating or sliding elements, for resting and moving on the ground on which also said at least one driving wheel (1) rests, said lower arms (3) being mounted on said vertical post (2),
and **characterized in that** it further comprises two support arms (5) on which side wheels (50) are mounted, said support arms (5) being rotatable so as to switch between:
- a first condition in which both the side wheels (50) mounted on the support arms (5) are spaced and lifted with respect to the supporting ground of said at least one driving wheel (1), and
- a second condition in which at least one of said side wheels (50), preferably both side wheels (50), mounted on the support arms (5) contact the ground supporting said at least one driving wheel (1),
and being configured so that the support arms (5) are movable so that the support arms themselves and the side wheels (50) mounted on said support arms can be mutually approached or moved away.

2. Pallet jack according to claim 1, **characterized in that** said lower arms (3) are associated with a further mechanism for their vertical movement along said vertical post (2) between a position in which said rollers (30), or others rotating or sliding elements are in contact with the ground on which said at least one driving wheel (1) rests and at least a position in which said rollers (30), or other rotating or sliding elements, are spaced / lifted from the ground on which said at least one driving wheel (1) rests.

3. Pallet jack according to one or more of the preceding claims, **characterized in that** it is configured to reach and switch between:
- a first configuration in which said at least one driving wheel (1) and the rollers (30), or other rotating or sliding elements, of said lower arms (3) rest on the ground, while the support arms (5) are in said first condition,
- a second configuration in which said at least one driving wheel (1) and the side wheels (50) mounted on the support arms (5), which are thus in said second condition, rest on the ground, while the rollers (30), or other rotating or sliding elements, of said lower arms (3) are spaced / lifted with respect to the ground.

4. Pallet jack according to one or more of the preceding claims, characterized to be configured so as to also comprise a configuration, which preferably is intermediate between said first configuration and said second configuration, wherein said at least one driving wheel (1), the rollers (30), or other rotating or sliding elements, of said lower arms (3), rest on the ground, and in which also the side wheels (50) mounted on the support arms (5), which are located consequently in said second condition, rest on the ground.

5. Pallet jack according to one or more of the preceding claims, **characterized in that** the switch of the support arms (5) between said first and second condition occurs by rotation of the support arms (5) around the axis of extendable arms (8 , 9) of a transverse element (6) to which one end of the support arms (5) is attached, when the pallet jack switches from the first configuration to the second configuration, to allow the side wheels (50) to touch the surface of the ground on which the pallet jack is intended to be positioned and to move.

6. Pallet jack according to claim 5, wherein the extendable arms (8, 9) are further configured to allow the mutual approach / removal of the support arms (5) and the relative side wheels (50) until they exceed the dimensions of the load to be moved, so that the support arms (5) switch from said first condition to said second condition.

7. Pallet jack according to one or more of the preceding claims, **characterized in that** in said first condition the support arms (5) are substantially in a substantially vertical or slightly inclined orientation with respect to the vertical, and preferably the side wheels (50) are located above the driving wheel (1).

8. Pallet jack according to one or more of the preceding claims, **characterized in that** in said second condition the support arms (5) are substantially in a substantially horizontal or slightly inclined orientation with respect to the horizontal, and the side wheels (50) rest on the ground.

9. Pallet jack according to one or more of the preceding claims, **characterized in that** the rotation of a support arm (5) is independent of the rotation of the other support arm (5), thus allowing to position the corresponding side wheels (50) at different heights with reference to the pallet jack frame (11).

10. Pallet jack according to one or more of the preceding claims, **characterized in that** it also comprises a swing actuator (21) connected to the vertical post (2), so as to allow swinging movements of the post (2) in said first configuration and / or in said second configuration of said pallet jack.

11. Method of using a pallet jack according to one or more of the preceding claims, **characterized in that**:
- when the pallet jack (100) is in said first configuration, paths are made on regular and substantially smooth grounds, such as for example the floor of a square,
- when the pallet jack (100) is in said second configuration, off-road routes are carried out on uneven and rough ground and / or presenting various difficulties, such as for example particularly steep slopes and / or obstacles, very sharp turns, and / or an uneven surface.

12. Method according to claim 11, **characterized in that** when the pallet jack (100) is in said first configuration, the load to be lifted / moved is loaded / unloaded.

13. Method according to one or more of the preceding claims 11 or 12, **characterized in that** during the switch from said first to said second configuration the load is kept lifted in position by the lifting arms (4).

14. Method according to one or more of the preceding claims 11 to 13, **characterized in that**, in order to switch from said first to said second configuration of the pallet jack (100), the following operations are carried out:
- while keeping the rollers (30), or other rotating or sliding elements of said lower arms (3) resting on the ground, the support arms (5) move away from each other until they exceed the lateral dimensions of the load to be handled and supported by the lifting arms (4),
- while keeping the rollers (30), or other rotating or sliding elements of said lower arms (3) resting on the ground, the support arms (5) are rotated from said first condition to said second condition until when the side wheels (50) touch the ground,
- the rollers (30), or the other rotating or sliding elements of said lower arms (3) are lifted and distanced from the ground, to reach said second configuration.

15. Method according to one or more of the preceding claims 11 to 14, **characterized in that**, in order to switch from said second to said first configuration of the pallet jack (100), the following operations are carried out:
- lower arms (3) are lowered until the rollers (30), or the other rotating or sliding elements, of said lower arms (3) rest on the ground,
- while keeping the rollers (30), or other rotating or sliding elements of said lower arms (3) resting on the ground, the support arms (5) are rotated from said second condition to said first condition until when the side wheels (50) are in a predetermined position spaced and lifted with respect to the ground,
- while keeping the rollers (30), or other rotating or sliding elements of said lower arms (3) resting on the ground, the support arms (5) approach each other, preferably until they are within the lateral dimensions of the vertical upright (2)

## Patentansprüche

1. Palettenhubwagen zum Heben und/oder Handhaben von Lasten, insbesondere Paletten, die leer oder mit Gütern oder anderen Lasten im Allgemeinen ausgestattet, bestehend aus:
- einem auf mindestens einem, vorzugsweise motorisierten, Antriebsrad (1) montierten Rahmen (11) zur Handhabung des Paletten-Hubwagens,
- einen mit dem Rahmen (11) verbundenen vertikalen Pfosten (2),
- Hebearme (4) der anzuhebenden/zu bewegenden Last, wobei die Hebearme (4) an dem vertikalen Pfosten (2) montiert sind und mit einem Mechanismus (12) für ihre vertikale Bewegung entlang des vertikalen Pfostens (2) verbunden sind,
- untere Arme (3), die mit Rollen (30) oder anderen Dreh-oder Gleitelementen ausgestattet sind, zum Aufliegen und Bewegen auf dem Boden, auf dem auch das mindestens eine Antriebsrad (1) ruht, wobei die untere Arme (3) auf dem genannten vertikalen Pfosten (2) montiert sind,
und **dadurch gekennzeichnet, dass** er außerdem zwei Stützarme (5) umfasst, an denen Seitenräder (50) montiert sind, wobei die Stützarme (5) drehbar sind, um zwischen Folgendem umzuschalten:
- einen ersten Zustand, in dem beide an den Stützarmen (5) montierten Seitenräder (50) in Bezug auf den Stützboden des mindestens einen Antriebsrads (1) beabstandet und angehoben sind, und
- einen zweiten Zustand, in dem mindestens eines der Seitenräder (50), vorzugsweise beide Seitenräder (50), die an den Stützarmen (5) montiert sind, den Boden berühren, der das mindestens eine Antriebsrad (1) trägt,
und die so gestaltet ist, dass die Stützarme selbst und die an den Stützarmen montierten Seitenräder (50) einander angenähert oder wegbewegt werden können.

2. Paletten-Hubwagen nach Anspruch 1, **dadurch gekennzeichnet, dass** den unteren Armen (3) ein weiterer Mechanismus für ihre vertikale Bewegung entlang des vertikalen Pfostens (2) zugeordnet ist, zwischen einer Position, in der die Rollen (30) oder andere rotierende oder gleitende Elemente in Kontakt mit dem Boden sind, auf dem das mindestens eine Antriebsrad (1) ruht, und mindestens einer Position, in der die Rollen (30) oder andere rotierende oder gleitende vom Boden beabstandet/angehoben sind, auf dem das mindestens eine Antriebsrad (1) ruht.

3. Paletten-Hubwagen nach einem oder mehreren der vorhergehenden Ansprüche, **dadurch gekennzeichnet, dass** er zum Erreichen und Umschalten wie folgt konfiguriert ist:
- zwischen einer ersten Konfiguration, bei der das mindestens eine Antriebsrad (1) und die Rollen (30) oder andere Dreh-oder Gleitelemente der unteren Arme (3) auf dem Boden ruhen, während sich die Stützarme (5) im besagten ersten Zustand befinden,
- zwischen einer zweiten Konfiguration, bei der das mindestens eine Antriebsrad (1) und die an den Stützarmen (5) montierten Seitenräder (50), die sich somit im zweiten Zustand befinden, auf dem Boden ruhen, während die Rollen (30) oder andere Dreh-oder Gleitelemente der unteren Arme (3) in Bezug auf den Boden beabstandet/angehoben sind.

4. Paletten-Hubwagen nach einem oder mehreren der vorhergehenden Ansprüche, **dadurch gekennzeichnet, dass** er so konfiguriert ist, dass er auch eine Konfiguration umfasst, die vorzugsweise zwischen der ersten Konfiguration und der zweiten Konfiguration liegt, wobei das mindestens eine Antriebsrad (1), die Rollen (30) oder andere Dreh- oder Gleitelemente der unteren Arme (3) auf dem Boden aufliegen, und wobei auch die an den Stützarmen (5) montierten Seitenräder (50), die sich folglich im zweiten Zustand befinden, auf dem Boden ruhen.

5. Paletten-Hubwagen nach einem oder mehreren der vorhergehenden Ansprüche, **dadurch gekennzeichnet, dass** das Umschalten der Stützarme (5) zwischen dem ersten und zweiten Zustand durch Drehung der Stützarme (5) um die Achse der ausfahrbaren Arme (8, 9) eines Querelements (6) erfolgt, an dem ein Ende der Stützarme (5) befestigt ist, wenn der Paletten-Hubwagen von der ersten Konfiguration in die zweite Konfiguration wechselt, damit die Seitenräder (50) die Oberfläche des Bodens berühren können, auf dem der Paletten-Hubwagen positioniert und bewegt werden soll.

6. Paletten-Hubwagen nach Anspruch 5, wobei die ausfahrbaren Arme (8, 9) weiterhin so konfiguriert sind, dass sie die gegenseitige Annäherung/Entfernung der Stützarme (5) und der jeweiligen Seitenräder (50) ermöglichen, bis sie die Abmessungen der zu bewegenden Last überschreiten, so dass die Stützarme (5) vom ersten Zustand in den zweiten Zustand wechseln.

7. Palettenhubwagen nach einem oder mehreren der vorhergehenden Ansprüche, **dadurch gekennzeichnet, dass** sich im ersten Zustand die Stützarme (5) im Wesentlichen in einer im Wesentlichen vertikalen oder leicht geneigten Ausrichtung gegenüber der Vertikalen befinden, und zwar dass vorzugsweise die Seitenräder 50) über dem Antriebsrad (1) positioniert sind.

8. Palettenhubwagen nach einem oder mehreren der vorhergehenden Ansprüche, **dadurch gekennzeichnet, dass** sich die Stützarme (5) im zweiten Zustand im Wesentlichen in einer im Wesentlichen horizontalen oder leicht geneigten Ausrichtung gegenüber der Horizontalen befinden und dass die seitlichen Räder (50) auf dem Boden ruhen.

9. Palettenhubwagen nach einem oder mehreren der vorhergehenden Ansprüche, **dadurch gekennzeichnet, dass** die Drehung eines Stützarms (5) unabhängig von der Drehung des anderen Stützarms (5) ist und somit eine Positionierung der entsprechenden Seitenräder (50) auf unterschiedliche Höhen mit bezug auf dem Rahmen (11) des Palettenhubwagens möglich ist.

10. Palettenhubwagen nach einem oder mehreren der vorhergehenden Ansprüche, **dadurch gekennzeichnet, dass** er außerdem einen Schwenkantrieb (21) umfasst, der mit dem vertikalen Pfosten (2) verbunden ist, um Schwenkbewegungen des Pfostens (2) in der ersten Konfiguration und/oder in der zweiten Konfiguration des Palettenhubwagens zu ermöglichen.

11. Verfahren zur Verwendung eines Palettenhubwagens nach einem oder mehreren der vorhergehenden Ansprüche, **dadurch gekennzeichnet, dass**:
- wenn sich der Palettenhubwagen (100) in der ersten Konfiguration befindet, werden Wege auf regelmäßigen und im Wesentlichen glatten Böden angelegt, wie zum Beispiel dem Boden eines Platzes,
- wenn sich der Palettenhubwagen (100) in der zweiten Konfiguration befindet, werden Wege angelegt, die Straßenrouten auf unebenem und unebenem Boden durchführen und/oder verschiedene Schwierigkeiten aufweisen, wie zum Beispiel besonders steile Hänge und/oder Hindernisse, sehr scharfe Kurven und/oder eine unebene Oberfläche.

12. Verfahren nach Anspruch 11, **dadurch gekennzeichnet, dass**, wenn sich der Palettenhubwagen (100) in der ersten Konfiguration befindet, wird die anzuhebende/zu bewegende Last geladen/entladen.

13. Verfahren nach einem oder mehreren der vorhergehenden Ansprüche 11 oder 12, **dadurch gekennzeichnet, dass** während des Wechsels von der ersten zur zweiten Konfiguration wird die Last durch die Hebearme (4) in ihrer Position angehoben gehalten.

14. Verfahren nach einem oder mehreren der vorhergehenden Ansprüche 11 bis 13, **dadurch gekennzeichnet, dass** um von der ersten zur zweiten Konfiguration des Palettenhubwagens (100) zu wechseln, werden die folgenden Schritte ausgeführt:
- während die Rollen (30) oder andere Dreh-oder Gleitelemente der unteren Arme (3) weiterhin auf dem Boden ruhen, bewegen sich die Stützarme (5) so weit voneinander weg, bis sie die seitlichen Abmessungen der zu handhabenden und von den Stützarmen (4) getragenen Last überschreiten,
- während die Rollen (30) oder andere Dreh- oder Gleitelemente der unteren Arme (3) weiterhin auf dem Boden ruhen, werden die Stützarme (5) vom ersten Zustand in den zweiten Zustand gedreht, bis die Seitenräder (50) den Boden berühren,
- die Rollen (30) oder die anderen Dreh- oder Gleitelemente der unteren Arme (3) sind derart angehoben und vom Boden entfernt, so dass sie die zweite Konfiguration erreichen.

15. Verfahren nach einem oder mehreren der vorhergehenden Ansprüche 11 bis 14, **dadurch gekennzeichnet, dass** zum Umschalten von der zweiten auf die erste Konfiguration des Palettenhubwagens (100) werden die folgenden Schritte ausgeführt:
- die unteren Arme (3) werden abgesenkt bis die Rollen (30) oder die anderen Dreh- oder Gleitelemente der unteren Arme (3) auf dem Boden aufliegen,
- während die Rollen (30) oder andere Dreh- oder Gleitelemente der unteren Arme (3) auf dem Boden ruhen, werden die Stützarme (5) von der zweiten Stellung in die erste Stellung gedreht, bis sich die Seitenräder (50) sich in einer vorbestimmten, beabstandeten und gegenüber dem Boden angehobenen Position befinden,
- während die Rollen (30) oder andere Dreh- oder Gleitelemente der unteren Arme (3) auf dem Boden ruhen, nähern sich die Stützarme (5) einander an, vorzugsweise bis sie sich innerhalb der seitlichen Abmessungen des vertikalen Pfostens (2) befinden.

## Revendications

1. Transpalette pour le levage et/ou la manutention de charges, notamment de palettes, vides ou avec des marchandises, ou d'autres charges en général, comprenant:
- un châssis (11) monté sur au moins une roue motrice (1), de préférence motorisée, pour la manutention du transpalette,
- un montant vertical (2) associé audit châssis (11),
- des bras de levage (4) de la charge à lever/déplacer, lesdits bras de levage (4) étant montés sur ledit montant vertical (2) et étant associés à un mécanisme (12) pour leur déplacement vertical le long dudit montant vertical (2)
- des bras inférieurs (3) équipés de rouleaux (30), ou d'autres éléments rotatifs ou coulissants, pour reposer et se déplacer sur le sol sur lequel repose également ladite au moins une roue motrice (1), lesdits bras inférieurs (3) étant montés sur ledit montant vertical (2),
et **caractérisé en ce qu'**il comprend en outre deux bras de support (5) sur lesquels sont montées des roues latérales (50), lesdits bras de support (5) étant rotatifs de manière à basculer entre:
- une première condition dans laquelle les deux roues latérales (50) montées sur les bras de support (5) sont espacées et levées par rapport au sol de support de ladite au moins une roue motrice (1), et
- une deuxième condition dans laquelle au moins une desdites roues latérales (50), de préférence les deux roues latérales (50), montées sur les bras de support (5) entrent en contact avec le sol supportant ladite au moins une roue motrice (1),
et également configuré de telle sorte que les bras de support (5) sont mobiles de sorte que les bras de support eux-mêmes et les roues latérales (50) montées sur lesdits bras puissent être mutuellement rapprochés ou éloignés.

2. Transpalette selon la revendication 1, **caractérisé en ce que** lesdits bras inférieurs (3) sont associés à un autre mécanisme pour leur déplacement vertical le long dudit montant vertical (2) entre une position dans laquelle lesdits rouleaux (30), ou autres éléments rotatifs ou coulissants sont en contact avec le sol sur lequel repose ladite au moins une roue motrice (1) et au moins une position dans laquelle lesdits rouleaux (30), ou autre des éléments rotatifs ou coulissants, sont espacés/levés du sol sur lequel repose ladite au moins une roue motrice (1).

3. Transpalette selon une ou plusieurs des revendications précédentes, **caractérisé en ce qu'**il est configuré pour atteindre et commuter entre:
- une première configuration dans laquelle ladite au moins une roue motrice (1) et les rouleaux (30), ou autres éléments rotatifs ou coulissants, desdits bras inférieurs (3) reposent sur le sol, tandis que les bras de support (5) se trouvent dans ladite première condition,
- une deuxième configuration dans laquelle ladite au moins une roue motrice (1) et les roues latérales (50) montées sur les bras de support (5), qui se trouvent ainsi dans ladite deuxième condition, reposent sur le sol, tandis que les rouleaux (30), ou d'autres éléments rotatifs ou coulissants, desdits bras inférieurs (3) sont espacés/levés par rapport au sol.

4. Transpalette selon une ou plusieurs des revendications précédentes, **caractérisé en ce qu'**il est configuré de manière à comprendre également une configuration, qui est de préférence intermédiaire entre ladite première configuration et ladite deuxième configuration, dans lequel ladite au moins une roue motrice (1), les rouleaux (30), ou d'autres éléments rotatifs ou coulissants, desdits bras inférieurs (3), reposent sur le sol, et dans lesquels également les roues latérales (50) montées sur les bras de support (5), qui se trouvent par conséquent dans ladite deuxième condition, repose-toi sur le sol.

5. Transpalette selon une ou plusieurs des revendications précédentes, **caractérisé en ce que** la commutation des bras de support (5) entre ladite première et ladite deuxième condition se produit par rotation des bras de support (5) autour de l'axe des bras extensibles (8, 9) d'un élément transversal (6) auquel est fixée une extrémité des bras de support (5), lorsque le transpalette passe de la première configuration à la deuxième configuration, pour permettre aux roues latérales (50) de toucher la surface du sol sur lequel le transpalette est destiné à être positionné et à déplacer.

6. Transpalette selon la revendication 5, dans lequel les bras extensibles (8, 9) sont en outre configurés pour permettre le rapprochement/retrait mutuel des bras de support (5) et des roues latérales relatives (50) jusqu'à ce qu'ils dépassent la dimensions de la charge à déplacer, de sorte que les bras de support (5) passent de ladite première condition à ladite deuxième condition.

7. Transpalette selon une ou plusieurs des revendications précédentes, **caractérisé en ce que** dans ladite première condition, les bras de support (5) se trouvent sensiblement dans une orientation sensiblement verticale ou légèrement inclinée par rapport à la verticale, et de préférence les roues latérales (50) sont situées au dessus de la roue motrice (1).

8. Transpalette selon une ou plusieurs des revendications précédentes, **caractérisé en ce que** dans ladite deuxième condition, les bras de support (5) se trouvent sensiblement dans une orientation sensiblement horizontale ou légèrement inclinée par rapport à l'horizontale, et les roues latérales (50) reposent sur le sol.

9. Transpalette selon une ou plusieurs des revendications précédentes, **caractérisé en ce que** la rotation d'un bras de support (5) est indépendante de la rotation de l'autre bras de support (5), permettant ainsi de positionner les roues latérales (50) correspondantes à différentes hauteurs par rapport au châssis du transpalette (11).

10. Transpalette selon une ou plusieurs des revendications précédentes, **caractérisé en ce qu'**il comprend également un vérin de balancement (21) relié au montant vertical (2), de manière à permettre des mouvements de balancement du montant (2) dans ladite première configuration et/ou dans ladite deuxième configuration dudit transpalette.

11. Procédé d'utilisation d'un transpalette selon une ou plusieurs des revendications précédentes, **caractérisé en ce que**:
- lorsque le transpalette (100) se trouve dans ladite première configuration, des cheminements sont réalisés sur des sols réguliers et sensiblement lisses, comme par exemple le sol d'une place,
- lorsque le transpalette (100) se trouve dans ladite deuxième configuration, des itinéraires hors-route sont réalisés sur des sols irréguliers et accidentés et/ou présentant des difficultés diverses, comme par exemple des pentes et/ou des obstacles particulièrement prononcés, des virages très serrés, et/ou une surface irrégulière.

12. Procédé selon la revendication 11, **caractérisé en ce que** lorsque le transpalette (100) se trouve dans ladite première configuration, la charge à soulever/déplacer est chargée/déchargée.

13. Procédé selon une ou plusieurs des revendications précédentes 11 ou 12, **caractérisé en ce que** pendant la commutation de ladite première à ladite deuxième configuration, la charge est maintenue levée en position par les bras de levage (4).

14. Procédé selon une ou plusieurs des revendications précédentes 11 à 13, **caractérisé en ce que** afin de commuter de ladite première à ladite deuxième configuration du transpalette (100), on effectue les opérations suivantes:
- tout en maintenant les rouleaux (30), ou autres éléments rotatifs ou coulissants desdits bras inférieurs (3) reposant sur le sol, les bras de support (5) s'écartent les uns des autres jusqu'à dépasser les dimensions latérales de la charge à manipuler et supporter par les bras de levage (4),
- tout en maintenant les rouleaux (30), ou d'autres éléments rotatifs ou coulissants desdits bras inférieurs (3) reposant sur le sol, les bras de support (5) sont mis en rotation depuis ladite première condition vers ladite deuxième condition jusqu'à ce que les roues latérales (50) touchent le sol,
- les rouleaux (30), ou les autres éléments rotatifs ou coulissants desdits bras inférieurs (3) sont soulevés et écartés du sol, pour atteindre ladite deuxième configuration.

15. Procédé selon une ou plusieurs des revendications précédentes 11 à 14, **caractérisé en ce que**,
pour commuter de ladite deuxième à ladite première configuration du transpalette (100), on effectue les opérations suivantes:
- les bras inférieurs (3) sont abaissés jusqu'à les rouleaux (30), ou les autres éléments rotatifs ou coulissants, desdits bras inférieurs (3) reposent sur le sol,
- tout en maintenant les rouleaux (30), ou autres éléments rotatifs ou coulissants desdits bras inférieurs (3) reposant sur le sol, les bras de support (5) sont entraînés en rotation depuis ladite deuxième condition vers ladite première condition jusqu'à ce que les roues latérales (50) se trouvent dans une position prédéterminée espacée et relevée par rapport au sol,
- tout en maintenant les rouleaux (30), ou autres éléments rotatifs ou coulissants desdits bras inférieurs (3) reposant sur le sol, les bras de support (5) se rapprochent, de préférence jusqu'à se trouver dans les dimensions latérales du montant vertical (2).
